(19) Europäisches Patentamt
European Patent Office
Office européen des brevets

(11) **EP 3 175 897 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(51) Int Cl.:
**B01D 11/04** (2006.01)

(21) Anmeldenummer: **15197955.6**

(22) Anmeldetag: **04.12.2015**

(54) **VERBESSERTES VERFAHREN ZUR EXTRAKTION VON AROMASTOFFEN AUS FETTHALTIGEN UND/ODER WÄSSRIGEN FLÜSSIGPHASEN**

IMPROVED METHOD FOR THE EXTRACTION OF AROMATIC SUBSTANCES FROM FAT-CONTAINING AND/OR AQUEOUS LIQUID PHASES

PROCEDE AMELIORE D'EXTRACTION DE MATIERES AROMATIQUES A PARTIR DE PHASES LIQUIDES AQUEUSES ET/OU CONTENANT DES GRAISSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.06.2017 Patentblatt 2017/23**

(73) Patentinhaber: **Evonik Degussa GmbH**
**45128 Essen (DE)**

(72) Erfinder:
- **Wiesmueller, Johann**
  **84518 Garching (DE)**
- **Michlbauer, Franz**
  **84558 Kirchweidach (DE)**
- **Oberbauer, Guenther**
  **84579 Unterneukirchen (DE)**
- **Hausner, Helmut**
  **83308 Trostberg (DE)**
- **Kaiser, Harald**
  **84518 Garching (DE)**

(56) Entgegenhaltungen:
**US-A- 4 929 348**

- **EGGERS R ET AL: "Extraction device for high viscous media in a high-turbulent two-phase flow with supercritical CO2", JOURNAL OF SUPERCRITICAL FLUIDS, PRA PRESS, US, Bd. 6, Nr. 1, 1. März 1993 (1993-03-01), Seiten 31-37, XP023999449, ISSN: 0896-8446, DOI: 10.1016/0896-8446(93)90007-K [gefunden am 1993-03-01]**
- **K.-W Qu: "Entolung von Rohlecithin durch Hochdruck-Dusenextdction mit Kohlendioxid *",, 1. Januar 1985 (1985-01-01), XP055272000, Gefunden im Internet: URL:http://onlinelibrary.wiley.com/store/1 0.1002/lipi.19850870602/asset/19850870602_ ftp.pdf?v=1&t=io2ygb8x&s=801aa57099c8f1509 f6e5c4160e6052dfd57c766 [gefunden am 2016-05-11]**

EP 3 175 897 B1

## Beschreibung

Die vorliegende Erfindung betrifft ein Verfahren zur kontinuierlichen Extraktion einer wässrigen und/oder fetthaltigen Flüssigphase umfassend Aromastoffe, mit einem Gas im flüssigen oder überkritischen Zustand.

## Hintergrund der Erfindung

Aromastoffe aus verschiedenen Naturstoffen kommen in verschiedenen Bereichen wie Nahrungsmitteln, Kosmetika, aber auch Pharmazeutika zum Einsatz. Allgemein bezeichnet der Begriff im Sinne der vorliegenden Erfindung "Aromastoffe" flüchtige Verbindungen in Lebensmitteln, welche mit den Geruchsrezeptoren entweder direkt durch die Nase oder über den Rachenraum beim Essen oder Trinken wahrgenommen werden. In der Literatur sind diesbezüglich über 7000 entsprechende chemische Verbindungen beschrieben (RÖMPP Lexikon Lebensmittelchemie, Hrsg. Gerhard Eisenbrand, Peter Schreier, 2. Auflage, 2006, Georg-Thieme-Verlag, Seite 75).

Aromastoffe aus Früchten zum Beispiel werden je nach Pflanzenart durch wenige Dutzend bis mehreren hundert chemische Verbindungen gebildet. Diese chemischen Verbindungen sind insbesondere Kohlenwasserstoffe (Terpene und Sesquiterpene) und oxygenierte Verbindungen (Alkohole, Aldehyde, Ketone, Säuren, Phenole, Laktone, Acetale, Ether und Ester).

Wässrige Lösungen enthaltend Fruchtaromen entstehen zum Beispiel bei der Herstellung von Fruchtsaftkonzentraten: Hier erfolgt die Eindickung von Fruchtsäften durch Verdampfung. Die bei der Verdampfung in den Fruchtbrüden enthaltenen Fruchtaromen müssen dem rückverdünnten Saft vor Abfüllung wieder zugeben. Der Nachteil an diesem Aromakonzentrat ist allerdings dessen geringe Lagerstabilität, die im Wesentlichen auf den Wassergehalt des Aromaextrakts zurückzuführen ist. Im Stand der Technik wurden deshalb Verfahren zur weiteren Konzentrierung der in den Fruchtbrüden enthaltenen Fruchtaromen entwickelt, z. B. in der EP 0 482 651 A1. Diese Verfahren beruhen darauf, dass die Fruchtaromen mit Hilfe eines Extraktionsmittels aus den Fruchtbrüden extrahiert und so weiter konzentriert werden. Natürlich gibt es auch Verfahren, die darauf gerichtet sind, unerwünschte Aromastoffe aus wässrigen Lösungen zu entfernen. Diesbezüglich beschreibt zum Beispiel die EP 0 041 723 A2 die Extraktion von Aromastoffen aus Bierhefe.

Neben der Extraktion von Aromastoffen aus wässrigen Lösungen ist auch die Extraktion von Aromastoffen aus viskoseren Medien wie Ölen und Fetten von hohem wirtschaftlichen Interesse und im Stand der Technik beschrieben (WO 96/11043; R. Eggers & H. Wagner, J Supercrit Fluid 1993, 6, 31 - 37). Wie im Falle der wässrigen Lösungen sind es in vielen Fällen die Aromastoffe in diesen Ölen und Fetten, welche zum Einsatz in Kosmetika und/oder Lebensmittels kommen.

Dies ist vor allem bei Fetten und Ölen pflanzlichen Ursprungs der Fall. Beispielhaft beschreibt S. Krist, "Lexikon der pflanzlichen Fette und Öle", 2. Auflage, Springer-Verlag Wien 2013, Seiten 218, 219, 262 die chemischen Verbindungen, welche für das Aromaspektrum der Erdnuss bzw. Haselnuss verantwortlich sind. Diese Fetten und Ölen pflanzlichen Ursprungs können durch verschiedene Verfahren wie beispielsweise Dampfdestillation und Extraktion (zusammengefasst z. B. in S. M. Pourmortazavi & S. S. Hajimirsadeghi, J Chromatogr A 2007, 1163, 2 - 24) aus dem jeweiligen Pflanzenmaterial gewonnen werden.

Daneben müssen aber in vielen Fällen unangenehm riechende Aromastoffe aus Ölen und Fetten entfernt werden. Dies ist insbesondere dann oft der Fall, wenn es sich um Öle oder Fette tierischen Ursprungs handelt. In diesen Fällen sind es nicht die unangenehm riechenden Aromastoffe, sondern vielmehr die von den Aromastoffen befreiten Öle und Fette, welche von wirtschaftlichem Interesse sind deshalb weiter verarbeitet werden. Tierische Öle und Fette können zum Beispiel beim Schlachten oder bei der Fleisch- bzw. Fischverarbeitung anfallen.

Als Extraktionsmittel werden in den Extraktionsverfahren des Standes der Technik Gase im flüssigen oder überkritischen Zustand benutzt. Sehr häufig handelt es sich dabei um überkritisches $CO_2$, welches unter Hochdruckbedingungen (zum Beispiel 260 bar, 50 °C) eingesetzt wird. Dabei wird das Extraktionsmittel (überkritisches $CO_2$) mit der zu extrahierenden Phase in einer Kolonne im Gegenstrom oder im Gleichstrom gemischt, wodurch die Aromastoffe aus der zu extrahierenden Phase in das Extraktionsmittel übergehen. In einem weiteren Verfahrensschritt können die isolierten Aromastoffe dann aus dem beladenen überkritischen $CO_2$ abgetrennt werden, in dem letzteres durch entsprechende Variation des Druckes und/oder der Temperatur in den gasförmigen Zustand überführt und dadurch leicht entfernt werden kann. Diese Verfahren werden kontinuierlich durchgeführt.

Während der Stand der Technik vielfältige Verfahren zur Extraktion von Aromastoffen aus wässrigen und/oder fetthaltigen Flüssigphasen beschreibt, besteht weiterhin ein Bedürfnis, diese beschriebenen Verfahren weiter hinsichtlich der Extraktionseffizienz zu verbessern. Die Aufgabe der vorliegenden Erfindung bestand deshalb darin, ein Verfahren zur Extraktion einer wässrigen und/oder fetthaltigen Flüssigphase zur Verfügung zu stellen, mit dem eine gegenüber den Verfahren des Standes der Technik effizientere Extraktion möglich ist.

**Beschreibung der Erfindung**

Es wurde nun überraschend ein Verfahren gefunden, welches die vorgenannte Aufgabe überraschend löst.

Gegenstand der Erfindung ist demnach ein Verfahren zur kontinuierlichen Extraktion einer wässrigen und/oder fetthaltigen Flüssigphase $F_1$ umfassend Aromastoffe, mit einem Gas $G_1$ im flüssigen oder überkritischen Zustand, wobei

(a) ein kontinuierlicher Strom $S_{F1}$ von $F_1$ mit einem kontinuierlichen Strom $S_{G1}$ von $G_1$ im Gleichstrom vermischt wird, wodurch ein kontinuierlicher Strom $S_1$ einer Mischung aus $S_{F1}$ und $S_{G1}$ erhalten wird;

(b) der in Schritt (a) erhaltene Strom $S_1$ kontinuierlich durch ein Rohr $R$ mit einer Innenoberfläche $O_I$ und einer Außenoberfläche $O_A$ geleitet wird,
wobei $S_1$ die Innenoberfläche $O_I$ des Rohres $R$ kontaktiert und wodurch in $S_1$ beim Durchströmen des Rohres $R$ die von $S_{F1}$ umfassten Aromastoffe zumindest teilweise in $S_{G1}$ extrahiert werden,
wodurch nach Durchströmen des Rohres $R$ ein kontinuierlicher Strom $S_2$ einer Mischung eines kontinuierlichen Stromes $S_{F2}$ aus gegenüber $S_{F1}$ an Aromastoffen abgereicherter Flüssigphase $F_2$ und eines kontinuierlichen Stromes $S_{G2}$ aus gegenüber $S_{G1}$ mit Aromastoffen angereichertem flüssigen und/oder überkritischen Gas $G_2$ erhalten wird,
dadurch gekennzeichnet, dass

(c) mindestens ein Teil des Stromes $S_2$ die Außenoberfläche $O_A$ des Rohres $R$ mindestens teilweise kontaktiert, so dass ein Wärmeaustausch zwischen $S_2$ und $S_1$ stattfindet, und dadurch gekennzeichnet, dass die Fließrichtung des Stromes $S_1$ beim Austritt aus dem Rohr $R$ mindestens teilweise entgegen der Schwerkraft gerichtet ist.

Das erfindungsgemäße Verfahren zeichnet sich gegenüber dem Stand der Technik durch eine erhöhte Extraktionseffizienz aus. Dies zeigt sich an den verbesserten Extraktionsraten, welche mit dem erfindungsgemäßen Verfahren im Vergleich zu den Verfahren des Standes der Technik erhalten werden.

Im erfindungsgemäßen Verfahren werden eine wässrige und/oder fetthaltigen Flüssigphase $F_1$ umfassend Aromastoffe sowie ein Gas $G_1$ im flüssigen oder überkritischen Zustand eingesetzt.

In Schritt (a) des erfindungsgemäßen Verfahrens wird ein kontinuierlicher Strom $S_{F1}$ von $F_1$ mit einem kontinuierlichen Strom $S_{G1}$ von $G_1$ im Gleichstrom vermischt.

Der Begriff "Flüssigphase" impliziert dabei, dass $F_1$ in Schritt (a) des erfindungsgemäßen Verfahrens bei einer Temperatur $T_{F1}$ und einem Druck $p_{F1}$ eingesetzt wird, in dem $F_1$ im flüssigen Aggregatszustand vorliegt. Die dazu nötige Temperatur $T_{F1}$ und der dazu nötige Druck $p_{F1}$ kann vom Fachmann leicht aufgrund seines Fachwissens ausgewählt werden. Der Einsatz als Flüssigphase ist nötig, damit eine ausreichende Fließfähigkeit von $F_1$ gewährleistet ist.

"Wässrige und/oder fetthaltige Flüssigphase $F_1$" bedeutet dabei, dass es sich um eine wässrige Flüssigphase $F_1$ oder eine fetthaltige Flüssigphase $F_1$ oder eine Flüssigphase $F_1$, die sowohl wässrig als auch fetthaltig ist, handeln kann.

Eine wässrige Flüssigphase $F_1$ ist insbesondere eine wässrige Lösung enthaltend Aromastoffe. Als "wässrige Lösung enthaltend Aromastoffe" kommt insbesondere eine wässrige Lösung enthaltend Fruchtaromen, und bevorzugt das bei der Verdampfung von Fruchtaromen erhaltene Brüdenwasser, in Betracht. "Fruchtaromen" sind die für die jeweiligen Früchte charakteristischen Fruchtaromen. Brüdenwasser bezeichnet das Brüdendampfkondensat aus der Verdampfung von Fruchtsäften. Die Fruchtaromen können von jeder üblichen Fruchtsorte stammen. Dabei kommen insbesondere folgende Früchte in Betracht: Ananas, Äpfel, Birnen, Datteln, Kumquats, Kiwis, Pflaumen, Kirschen, Aprikosen, Orangen, Limetten, Pampelmusen, Erdbeeren, Himbeeren, Brombeeren, Heidelbeeren, Kranbeeren, Vogelbeeren, Speierlingsbeeren, Elsbeeren, rote Johannisbeeren, schwarze Johannisbeeren, Stachelbeeren. Besonders bevorzugt sind Äpfel.

Wenn $F_1$ eine wässrige Flüssigphase ist, dann liegt $T_{F1}$ insbesondere im Bereich > 0 °C und < 100 °C. Bevorzugt ist dabei $T_{F1} \geq 15$ °C, noch bevorzugter $\geq 20$ °C, noch mehr bevorzugter 25 °C. $T_{F1}$ kann dann sogar aus dem Bereich 32 °C bis 95 °C, bevorzugt 45 °C bis 85 °C, bevorzugter 50 °C bis 75 °C, noch bevorzugter 60 °C bis 70 °C ausgewählt werden. Gleichzeitig liegt, wenn $F_1$ eine wässrige Flüssigphase ist, der Druck $p_{F1}$ insbesondere im Bereich 1 bar bis 400 bar, bevorzugt im Bereich von 74 bar bis 350 bar, bevorzugter im Bereich von 100 bar bis 300 bar, noch bevorzugter im Bereich von 100 bar bis 260 bar.

Eine fetthaltige Flüssigphase $F_1$ ist insbesondere ein Fett oder Öl pflanzlichen oder tierischen Ursprungs enthaltend Aromastoffe.

Als Fette und Öle pflanzlichen Ursprungs und enthaltend Aromastoffe kommen dabei insbesondere in Betracht (gegebenenfalls in Klammern angegebene lateinische Begriffe bezeichnen die Pflanzenart, aus welcher das betreffende Öl gewonnen wird): Algenöl, Aprikosenkernöl (*Prunus armeniaca*), Arganöl (*Argania spinosa*), Avocadoöl (*Persea americana*), Babassuöl (*Attalea speciosa*), Baumwollsamenöl (*Gossypium*), Behenöl (*Moringa oleifera*), Borretschöl (*Borago*

*officinalis*), Brennnesselsamenöl (*Urtica pilulifera* oder *Urtica dioica*), Cashew-Schalenöl *(Anacardium occidentale)*, Cupuaçu-Butter (*Theobroma grandiflorum*), Distelöl (*Carthamus*), Erdnussöl (*Arachis hypogaea*), Hagebuttenkernöl (Rosa), Hanföl (*Cannabis*), Haselnussöl (*Corylus avellana*), Jatrophaöl (*Jatropha curcas*), Jojobaöl (*Simmondsia chinensis*), Kaffeebohnenöl (*Coffea*), Kakaobutter (*Theobroma cacao*), Kamelienöl (*Camellia*), Kohlpalme (*Euterpe oleracea*), Kokosöl (*Cocos nucifera*), Kürbiskernöl (*Cucurbita*), Leindotteröl (*Camelina sativa*), Leinöl (*Linum*)*,* Maiskeimöl (*Zea mays*), Macadamiaöl (*Macadamia integrifolia, Macadamia tetraphylla*), Mandelöl (*Prunus dulcis*), Mangobutter (*Mangifera indica*), Mohnöl (*Papaver*)*,* Nachtkerzenöl (*Oenothera biennis*), Olivenöl (*Olea europaea*), Palmkernöl (aus Kernen der *Elaeis guineensis*), Palmöl (aus Fruchtfleisch der *Elaeis guineensis*), Papayasamenöl (*Carica papaya*), Pekanussöl (*Carya illinoinensis*), Perillaöl (*Perilla frutescens*), Pistazienöl (*Pistacia vera*), Rapsöl (*Brassica napus*), Reisöl (*Oryza sativa*), Rizinusöl (*Ricinus communis*), Sanddornkernöl (Kerne von *Hippophae rhamnoides*), Sanddornöl (Fruchtfleisch von *Hippophae rhamnoides*), Schwarzkümmelöl (*Nigella sativa*), Senföl (*Brassica nigra*), Sesamöl (*Sesamum indicum*), Sheabutter (*Vitellaria paradoxa*), Sojaöl (*Glycine max*), Sonnenblumenöl (*Helianthus annuus*), Traubenkernöl (*Vitis vinifera*), Tungöl (*Vernicia, Aleurites*), Walnussöl (*Juglans regia*), Wassermelonensamenöl (*Citrullus lanatus*), Weizenkeimöl (*Triticum*). Bevorzugt sind Kokosöl, Haselnussöl und Erdnussöl, besonders bevorzugt ist Haselnussöl.

Als Fette und Öle tierischen Ursprungs und enthaltend Aromastoffe kommen dabei insbesondere in Betracht: Murmeltierfett, Butterfett, Fischöl, Lebertran, Milchfett, Schweineschmalz, Rindertalg, Wollwachs.

Wenn $F_1$ eine fetthaltige Flüssigphase ist, dann muss $T_{F1}$ oberhalb des Schmelzbereiches von F liegen. Der Schmelzbereich eines bestimmten Fettes oder Öles ist dem Fachmann bekannt und / oder kann routinemäßig vom Fachmann bestimmt werden. Üblicherweise liegen die Öle bei Raumtemperatur, die Fette bei Temperaturen ≥ 31 °C, im flüssigen Aggregatzustand vor. Bei einer Temperatur $T_{F1}$ von $T_{F1}$ ≥ 31 °C, insbesondere $T_{F1}$ ≥ 50 °C, bevorzugt $T_{F1}$ ≥ 60 °C liegen alle Fette und Öle pflanzlichen und tierischen Ursprungs im flüssigen Aggregatzustand vor.

Somit liegt $T_{F1}$, wenn $F_1$ eine fetthaltige Flüssigphase ist, insbesondere im Bereich von > 15 °C und < 100 °C. Bevorzugt ist dabei $T_{F1}$ ≥ 20 °C, noch bevorzugter ≥ 25 °C. $T_{F1}$ kann dann sogar aus dem Bereich 32 °C bis 95 °C, bevorzugt 45 °C bis 85 °C, bevorzugter 50 °C bis 75 °C, noch bevorzugter 60 °C bis 70 °C ausgewählt werden. Gleichzeitig liegt, wenn $F_1$ eine fetthaltige Flüssigphase ist, der Druck $p_{F1}$ insbesondere im Bereich 1 bar bis 400 bar, bevorzugt im Bereich von 74 bar bis 350 bar, bevorzugter im Bereich von 100 bar bis 290 bar, noch bevorzugter im Bereich von 100 bar bis 260 bar.

Wenn $F_1$ eine Flüssigphase ist, die sowohl wässrig als auch fetthaltig ist, dann haben $T_{F1}$ und $p_{F1}$ bevorzugt die Werte, die für den Fall, dass $F_1$ eine fetthaltige Flüssigphase ist, angegeben sind.

Zum Einstellen der Temperatur $T_{F1}$ kann eine dem Fachmann bekannte Heizung benutzt werden.

Außerdem wird im erfindungsgemäßen Verfahren ein Gas $G_1$ eingesetzt, welches im flüssigen oder überkritischen Zustand vorliegt. "Gas $G_1$" impliziert dabei, dass der jeweilige Stoff bei Normaltemperatur (25 °C) und Normaldruck (1 bar) im gasförmigen Zustand vorliegt. Das Gas G wird dabei bei einer Temperatur $T_{G1}$ und einem Druck $p_{G1}$ eingesetzt, bei welchem es im flüssigen oder überkritischen, bevorzugt im überkritischen Zustand, vorliegt. Die Einstellung solcher Temperatur- und Druckbedingungen sind dem Fachmann bekannt. Zum Einstellen des überkritischen Zustands wird der jeweilige Stoff auf eine Temperatur $T_{G1}$ und einem Druck $p_{G1}$ eingestellt, die oberhalb des Drucks und der Temperatur am kritischen Punkt dieses Stoffes liegt.

Die kritischen Punkte einiger Gase $G_1$ sind aus der folgenden Aufstellung ersichtlich:

| Extraktionsmittel | $p_{krit.}$ | $T_{krit.}$ |
|---|---|---|
| $CO_2$ | 72.9 bar | 31.0 °C |
| $N_2O$ | 71.4 bar | 36.5 °C |
| Butan | 37.5 bar | 152.0 °C |
| Propan | 42.0 bar | 96.8 °C |
| Propen | 46.6 bar | 92.4 °C |
| Ethan | 50.7 bar | 9.5 °C |

$G_1$ ist insbesondere ausgewählt aus Kohlenstoffdioxid, Ethan, Propan, Propen, Butan, $N_2O$ und Mischungen davon. $G_1$ ist bevorzugt ausgewählt aus Kohlenstoffdioxid, Propan und Mischungen davon. $G_1$ ist bevorzugter Kohlenstoffdioxid, am bevorzugtesten überkritisches Kohlenstoffdioxid. Wenn es sich beim Gas $G_1$ um $CO_2$ handelt und dieses im überkritischen Aggregatszustand eingesetzt werden soll, dann wird im Schritt a) des erfindungsgemäßen Verfahrens insbesondere eine Temperatur von oberhalb der kritischen Temperatur des $CO_2$ und unterhalb von 100 °C, insbesondere im Bereich von 32 °C bis 95 °C, bevorzugt 45 °C bis 85 °C, bevorzugter 50 °C bis 75 °C, noch bevorzugter 60 °C bis 70 °C eingestellt. Gleichzeitig wird, wenn es sich beim Gas $G_1$ um $CO_2$ handelt und dieses im überkritischen Aggregatszustand eingesetzt werden soll, im Schritt a) des erfindungsgemäßen Verfahrens insbesondere ein Druck von oberhalb des kritischen Drucks des $CO_2$ und unterhalb von 400 bar, bevorzugt im Bereich von 74 bar bis 350 bar, bevorzugter im Bereich von 100 bar bis 290 bar, noch bevorzugter im Bereich von 100 bar bis 260 bar eingestellt.

Beide Ströme $S_{G1}$ und $S_{F1}$ weisen eine bestimmte, konstante Massenflussrate auf. Im Falle von $S_{G1}$ wird die Massenflussrate als $Q_{G1}$ bezeichnet. Im Falle von $S_{F1}$ wird die Massenflussrate als $Q_{F1}$ bezeichnet. Unter Massenflussrate $Q_{G1}$ versteht man im Falle von $S_{G1}$ die Masse des überkritischem oder flüssigen Gases $G_1$, welche einen gegebenen Querschnitt im System in einer bestimmten Zeit passiert. Im Falle von $S_{F1}$ versteht man unter Massenflussrate $Q_{F1}$ die Masse von $F_1$, welche einen gegebenen Querschnitt im System in einer bestimmten Zeit passiert. Einheit der Massenflussrate ist "kg s$^{-1}$". $Q_{G1}$ und $Q_{F1}$ können nach dem Fachmann bekannten Methoden, zum Beispiel mittels eines Durchflusssensors, bestimmt werden, wie sie unter anderem in der DIN EN ISO 5167 1-4, von G. Strohrmann, Messtechnik im Chemiebetrieb, München 2004, Oldenbourg Industrieverlag oder von O. Fiedler, Strömungs- und Durchflussmesstechnik, München 1992, Oldenbourg Industrieverlag beschrieben sind.

$S_{G1}$ und $S_{F1}$ werden dann in Schritt (a) des erfindungsgemäßen Verfahrens vermischt, wodurch man einen kontinuierlicher Strom ($S_1$) einer Mischung aus $S_{F1}$ und $S_{G1}$ erhält.

Der Schritt (a) des erfindungsgemäßen Verfahrens kann dabei in jedem geeigneten System durchgeführt werden, welches eine Vermischung der beiden Ströme $S_{F1}$ und $S_{G1}$ ermöglicht. Üblicherweise werden die beiden Ströme $S_{F1}$ und $S_{G1}$ vor deren Vermischung mit Hilfe einer Hochdruckpumpe durch jeweils ein Strömungsrohr geführt, an dessen Ende sie aufeinandertreffen und sich zum Strom $S_1$ vermischen. $S_1$ wird dann im Schritt b) des erfindungsgemäßen Verfahrens, wie weiter unten beschrieben, durch ein Rohr $R$ geführt.

Wesentlich für das erfindungsgemäße Verfahren ist dabei, dass die Vermischung der beiden Ströme $S_{F1}$ und $S_{G1}$ im Gleichstrom erfolgt. Das Merkmal "im Gleichstrom" bedeutet dabei, dass die beiden in die Flussrichtung des jeweiligen Stromes zeigenden Vektoren zumindest an dem Punkt, an dem die beiden Ströme $S_{F1}$ und $S_{G1}$ aufeinandertreffen und sich vermischen, einen Winkel $\alpha$ von $\leq 90$ ° bilden. Beispielsweise kann der Strom $S_{G1}$ mit dem Strom $S_{F1}$ getrennt in zwei separaten Strömungsrohren parallel geführt werden, die an dem Punkt, an dem die Vermischung erfolgt, auf gleicher Höhe in einem dritten Rohr enden (dann ist der oben beschriebene Winkel $\alpha = 0$ °). In diesem dritten Rohr erfolgt dann die Vermischung. Ebenso ist es im Sinne der Erfindung, dass einer der Ströme, zum Beispiel $S_{F1}$, mit dem anderen Strom, zum Beispiel $S_{G1}$, vermischt wird, wobei die beiden in die Flussrichtung des jeweiligen Stromes zeigenden Vektoren am Punkt, an dem die beiden Ströme $S_{F1}$ und $S_{K1}$ vermischt werden, einen spitzen Winkel oder einen rechten Winkel bilden.

Das Massenverhältnis von $S_{F1} : S_{G1}$ im Schritt b) des Verfahrens liegt dabei im Bereich von 1 : 1 bis 1 : 50, bevorzugt 1 : 3 bis 1 : 15. Dies ist somit automatisch das Verhältnis der Masse an $F_1$ und der Masse an flüssigem oder überkritischen Gas $G_1$ im resultierenden Strom $S_1$. Der Strom $S_1$ ist eine heterogene Mischung bestehend aus wässrigen und/oder fetthaltigen Flüssigphase $F_1$ umfassend Aromastoffe und dem Gas $G_1$ im flüssigen oder überkritischen Zustand. Der resultierende Strom $S_1$ liegt also zweiphasig vor und umfasst $S_{F1}$ als eine Phase und $S_{G1}$ als die andere Phase.

Der in Schritt a) erhaltene Strom $S_1$ wird dann im Schritt b) des erfindungsgemäßen Verfahrens kontinuierlich durch ein Rohr $R$ mit einer Innenoberfläche $O_I$ und einer Außenoberfläche $O_A$ geleitet. Das Rohr $R$ kann jede erdenkliche Geometrie aufweisen und kann ein einfaches Strömungsrohr sein, welches gebogen (z.B. spiralförmig) oder nicht gebogen sein kann und im Querschnitt die Geometrie eines geraden Kreiszylinders oder auch eines Dreiecks, Vierecks, Fünfecks oder Mehrecks aufweisen kann. Bevorzugt ist das Rohr $R$ ein einfaches Strömungsrohr, dessen Querschnitt die Geometrie eines geraden Kreiszylinders aufweist. Das Rohr $R$ kann Einbauten aufweisen oder auch nicht aufweisen, weist aber bevorzugt keine Einbauten aufweist.

Das Material, aus dem das Rohr gefertigt ist, soll dabei eine gute Wärmeleitfähigkeit gewährleisten. Insbesondere besteht das Rohr zumindest teilweise aus Edelstahl.

Erfindungswesentlich ist dabei, dass der in Schritt (a) erhaltene Strom $S_1$ das Rohr $R$ durchströmt und dadurch die von $S_{F1}$ umfassten Aromastoffe zumindest teilweise in $S_{G1}$ extrahiert werden. Dies geschieht automatisch bei der Vermischung von $S_{F1}$ und $S_{G1}$ im Strom $S_1$ beim Durchlaufen des Rohres aufgrund des Nernstschen Verteilungsgesetztes.

Das Rohr R weist dabei eine Innenoberfläche $O_I$ und eine Außenoberfläche $O_A$ auf. Unter "Innenoberfläche $O_I$" ist dabei erfindungsgemäß der Teil der Oberfläche des Rohres $R$, welcher im Schritt (b) vom Strom $S_1$ kontaktiert wird, zu verstehen. Unter "Außenoberfläche $O_A$" ist dabei erfindungsgemäß der Teil der Oberfläche des Rohres $R$, welcher im Schritt (b) vom Strom $S_1$ nicht kontaktiert wird, zu verstehen.

Die Aromastoffe werden im Strom $S_1$ schon alleine dadurch, dass der Strom $S_1$, der ja $S_{F1}$ und $S_{G1}$ umfasst, das Rohr $R$ durchströmt von der wässrigen und/oder fetthaltigen Flüssigphase $F_1$ in die flüssige oder überkritische Gasphase $G_1$ extrahiert. Dies ergibt sich schon aus dem Nernstschen Verteilungssatz. Noch weiter verbessern kann man die Extraktion, wenn man dafür sorgt, dass der Strom $S_1$ das Rohr $R$ im turbulenten Strömungszustand durchströmt. Dies gewährleistet einen noch besseren Stoffübergang der Aromastoffe aus der wässrigen und/oder fetthaltigen Flüssigphase $F_1$ in die flüssige oder überkritische Gasphase $G_1$. Da der Strom S1 in jedem Fall eine festgelegte Zusammensetzung hat und somit seine Dichte und seine dynamische Viskosität festgelegt sind, und da das Rohr $R$ eine festgesetzte Geometrie aufweist, hängt die Reynoldszahl Re des Stromes $S_1$, und damit der Strömungszustand des

Stromes $S_1$ gemäß der nachfolgenden Gleichung **<1>** alleine von seiner Strömungsgeschwindigkeit $v_1$ ab. Überschreitet die Reynoldszahl des Stromes $S_1$ einen kritischen Wert, geht $S_1$ vom laminaren in den turbulenten Strömungszustand über. Die Reynoldszahl berechnet sich nach der folgenden Gleichung **<1>**:

$$\text{<1>} \quad Re = \frac{2\,r\,\mathbf{v_1}\,\rho}{\eta}\,.$$

Dabei ist r bei einem kreisförmigen Rohr dessen Radius.

$\rho$ ist die Dichte der vom Strom $S_1$ umfassten Mischung aus $F_1$ und flüssigem oder überkritischem $G_1$.

$\eta$ ist die dynamische Viskosität der vom Strom $S_1$ umfassten Mischung aus $F_1$ und flüssigem oder überkritischem $G_1$.

Ab welcher Strömungsgeschwindigkeit $v_1$ des Stromes $S_1$ eine turbulente Strömung vorliegt, kann vom Fachmann demnach mit Hilfe der Gleichung **<1>** von Fall zu Fall berechnet werden. Alternativ kann der Übergang des Stromes $S_1$ vom laminaren in den turbulenten Strömungszustand, also das Verschwinden der durchgehenden Phasengrenze zwischen $F_1$ und flüssigem oder überkritischem $G_1$ im Strom $S_1$, auch visuell festgestellt werden und die Strömungsgeschwindigkeit $v_1$ des Stromes $S_1$ routinemäßig vom Fachmann so eingestellt werden, dass eine turbulente Strömung vorliegt. Dies ist zum Beispiel über ein Fenster möglich, welches im Rohr **R** vorhanden ist, und mit Hilfe dessen der Fachmann das Auftreten einer turbulenten Strömung leicht beobachten und so eine Geschwindigkeit $v_1$, bei welcher diese turbulente Strömung auftritt, einstellen kann.

Dadurch dass die Fließgeschwindigkeit $v_1$ von $S_1$ im Rohr **R** so ausgewählt wird, dass $S_1$ das Rohr **R** im turbulenten Strömungszustand durchströmt, werden in $S_1$ beim Durchströmen des Rohres **R** die in $F_1$ enthaltenen Aromastoffe zumindest teilweise in das flüssige oder überkritische Gas $G_1$ extrahiert. Dieser Übergang der Aromastoffe aus $F_1$ in das flüssige oder überkritische Gas $G_1$ ist dann besonders gut gewährleistet, wenn $S_1$ im turbulenten Strömungszustand das Rohr **R** durchströmt.

Im Schritt b) des erfindungsgemäßen Verfahrens wird die wässrige und/oder fetthaltige Flüssigphase $F_1$ im Strom $S_1$ beim Durchströmen des Rohres **R** von den Aromastoffen abgereichert und das Gas $G_1$ im flüssigen oder überkritischen Zustand im Strom $S_1$ beim Durchlaufen des Rohres **R** an Aromastoffen angereichert. Nach Durchströmen des Rohres **R** wird somit ein kontinuierlicher Strom $S_2$ erhalten. $S_2$ ist die Mischung eines kontinuierlichen Stromes $S_{F2}$ einer Flüssigphase $F_2$ und eines kontinuierlichen Stromes $S_{G2}$ aus flüssigem oder überkritischem Gas $G_2$. $F_2$ ist eine gegenüber $F_1$ an Aromastoffen abgereicherte Flüssigphase. $G_2$ ist gegenüber $G_1$ mit Aromastoffen angereichertes flüssiges oder überkritisches Gas.

Erfindungsgemäß bezeichnet $S_1$ den Strom ab dem Augenblick, in dem $S_{F1}$ und $S_{G1}$ vermischt werden bis zu dem Augenblick, an dem der Strom $S_1$ aus dem Rohr **R** austritt. Nach dem Austritt des Stromes $S_1$ aus dem Rohr **R** wird der Strom erfindungsgemäß als $S_2$ bezeichnet.

Erfindungswesentlich ist nun, dass nach dem Schritt (b) des erfindungsgemäßen Verfahrens in einem Schritt (c) mindestens ein Teil des Stromes $S_2$ die Außenoberfläche $O_A$ des Rohres **R** mindestens teilweise kontaktiert, so dass ein Wärmeaustausch zwischen $S_2$ und $S_1$ stattfindet. Dies kann insbesondere einfach dadurch bewerkstelligt werden, dass der Strom $S_2$ mindestens teilweise an der Außenoberfläche $O_A$ des Rohres **R** entlangströmt.

Dadurch wird der das Rohr **R** durchströmende Strom $S_1$ durch den am Ende des Rohres **R** austretenden Strom $S_2$ temperiert. Da der Strom $S_1$ beim Durchströmen des Rohres **R** zwangsläufig in seiner Temperatur variiert, unterliegt die von der Temperatur abhängige Extraktion der Aromastoffe von der $G_1$ in $F_1$ Schwankungen, so dass sich die Temperatur von $S_1$ am Anfang des Rohres **R** von jener am Ende des Rohres **R** unterscheidet. Dieses Problem ist umso größer, je länger das Rohr **R** ist und verstärkt sich also gerade in den Fällen, in denen eine besonders effiziente Extraktion durch Verwendung eines besonders langen Rohres **R** erreicht werden soll. Es wurde nun überraschend festgestellt, dass die Extraktionseffizienz deutlich verbessert werden kann, wenn die Temperatur von $S_1$ bei Durchströmen des Rohres **R** über dessen gesamte Länge dadurch konstant gehalten wird, dass man den Strom $S_2$ als Wärmemedium für die Temperierung des im Rohr **R** befindlichen Stromes $S_1$ nutzt. Dies hat den Vorteil, dass kein zusätzliches Kühl-oder Wärmemittel eingesetzt werden muss, da ja der Strom $S_2$ selbst als Wärmemedium wirkt. Zusätzlich gibt es kein Wärmemedium, dessen Temperatur so nahe an der Temperatur von $S_1$ ist wie $S_2$. Der weitere Vorteil dieses Vorgehensweise im Schritt c) des erfindungsgemäßen Verfahrens besteht deshalb darin, dass kein anderes Wärmemedium so flexibel auf die Temperaturschwankungen des Stromes $S_1$ im Rohr **R** reagieren und diese ausgleichen kann wie $S_2$.

Die mindestens teilweise Kontaktierung der Außenoberfläche $O_A$ des Rohres **R** durch mindestens einen Teil des Stromes $S_2$ kann dabei über jede dem Fachmann geläufige Art geschehen. Es muss nur gewährleistet sein, dass ein Wärmeaustausch zwischen dem die Außenoberfläche $O_A$ des Rohres **R** kontaktierenden Strom $S_2$ und die Innenoberfläche $O_I$ des Rohres **R** kontaktierenden Strom $S_1$ stattfindet. Dabei wird im Schritt (c) des erfindungsgemäßen Verfahrens insbesondere mindestens 10 %, bevorzugt mindestens 20 %, noch bevorzugter 30 %, noch bevorzugter 40 % noch bevorzugter 50 %, noch bevorzugter 60 %, noch bevorzugter 70 %, noch bevorzugter 80 %, noch bevorzugter 90 %, noch mehr bevorzugter 95 % der Außenoberfläche $O_A$ des Rohres **R** vom Strom $S_2$ kontaktiert, wobei vorteilhaf-

terweise nicht mehr als 95 % der Außenoberfläche $O_A$ des Rohres $R$ vom Strom $S_2$ kontaktiert wird.

Das erfindungsgemäße Verfahren wird so durchgeführt, dass die Fließrichtung des Stromes $S_1$ beim Austritt aus dem Rohr $R$ mindestens teilweise entgegen der Schwerkraft gerichtet ist. Dadurch wirkt die Schwerkraft auf den Strom $S_2$ ein, der Strom $S_2$ wird dadurch durch in Richtung der Schwerkraft abgelenkt und kontaktiert somit automatisch die Außenoberfläche $O_A$ des Rohres $R$.

In einer weiteren bevorzugten Ausführungsform führt das Rohr $R$ in den Innenraum eines Autoklaven $A$ und der Strom $S_1$ wird in Schritt (b) durch das Rohr $R$ in den Innenraum des Autoklaven $A$ geleitet. Autoklaven $A$ sind dem Fachmann bekannt. Durch die Verwendung eines Autoklaven $A$ können die Temperatur- und Druckverhältnisse, denen $S_2$ unterworfen ist, besser kontrolliert werden. Gleichzeitig ergibt sich dadurch noch der zusätzliche Vorteil, dass in einer noch bevorzugteren Ausführungsform die Kontaktierung der Außenoberfläche $O_A$ des Rohres $R$ mit mindestens einem Teil des Stromes $S_2$ noch dadurch verbessert werden kann, dass der Strom $S_2$ im Autoklaven $A$ gestaut wird und der gestaute Strom $S_2$ die im Innenraum des Autoklaven befindliche Außenoberfläche $O_A$ des Rohres $R$ mindestens teilweise bedeckt. Dadurch wird der Wärmeaustausch zwischen $S_2$ und $S_1$ noch verbessert.

Die Stauung des Stromes $S_2$ im Autoklaven kann auf mehrere dem Fachmann bedenkliche Art und Weise erfolgen. So kann der Strom $S_2$ im Autoklaven $A$ gestaut werden, in dem $S_2$ einfach in den Autoklaveninnenraum laufen gelassen wird und der Pegel von $S_2$ im Autoklaveninnenraum dadurch immer mehr ansteigt. Alternativ kann auch eine Öffnung in den Boden des Autoklaven $A$ oder eine Seitenwand des Autoklaven $A$ angebracht sein, durch die $S_2$ zwar zum Teil, aber nicht vollständig abfließen kann, so dass $S_2$ sich langsamer im Autoklaven $A$ staut.

Vorteilhafterweise wird im erfindungsgemäßen Verfahren ein weiterer Schritt (d) durchgeführt. In diesem Schritt (d) des erfindungsgemäßen Verfahrens wird dann das in $S_2$ enthaltene $S_{G2}$ von dem in $S_2$ enthaltenen $S_{F2}$ kontinuierlich abgetrennt.

Diesen bevorzugten Schritt (d) kann man gleichzeitig mit dem Schritt (c) durchführen. In einer solchen Ausführungsform des erfindungsgemäßen Verfahrens, die noch bevorzugter innerhalb eines Autoklaven $A$ durchgeführt wird, teilt sich der Strom $S_2$ schon kurz nach Austritt des Stromes $S_1$ aus dem Rohr $R$ dergestalt auf, dass das von $S_2$ erfasste $S_{G2}$ mindestens teilweise nach oben abströmt und das das von $S_2$ erfasste $S_{F2}$ mindestens teilweise nach unten abströmt, und es dann auch nur dieser nach unten abströmende Teil von $S_2$ ist, der die Außenoberfläche $O_A$ des Rohres $R$ berührt. Der Schritt (d) des erfindungsgemäßen Verfahren läuft in dieser Ausführungsform damit ab, ohne dass weitere Abtrennungsschritte möglich wären.

Alternativ oder zusätzlich die kontinuierliche Abtrennung des in $S_2$ enthaltene $S_{G2}$ von dem in $S_2$ enthaltenen $S_{F2}$ noch zu verbessern, kann eine solche Abtrennung dadurch geschehen, dass man den Strom $S_2$ zunächst in einen Phasentrenner leitet und die von Aromastoffen abgereicherte Phase $S_{F2}$ von der mit Aromastoffen angereicherten Phase des flüssigen oder überkritischen Gases $S_{G2}$ abtrennt. Bevorzugt findet die Abtrennung statt, in dem man im Phasentrenner die Fließgeschwindigkeit des Stromes $S_2$ reduziert, wodurch sich zwischen $S_{G2}$ von $S_{F2}$ eine durchgehende Phasengrenze bildet und die beiden Ströme leicht voneinander kontinuierlich abgetrennt werden. Die angereicherte mit Aromastoffen angereicherten Phase des flüssigen oder überkritischen Gases $S_{G2}$ wird dann in einen Extraktabscheider geleitet, wo durch Druckerniedrigung und Verdampfung des Gases $G_2$ der aromahaltige Extrakt gewonnen wird (beschrieben zum Beispiel auch in EP 0 159 021 A2).

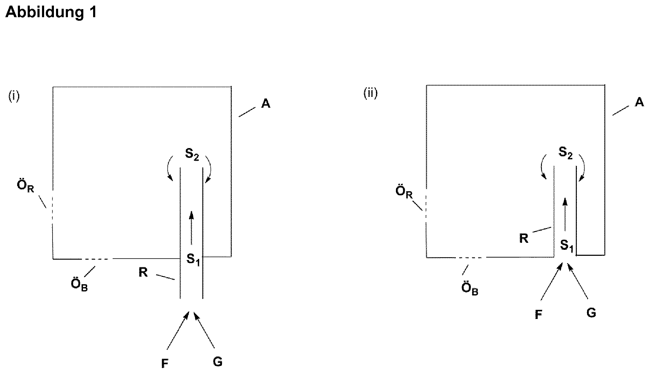

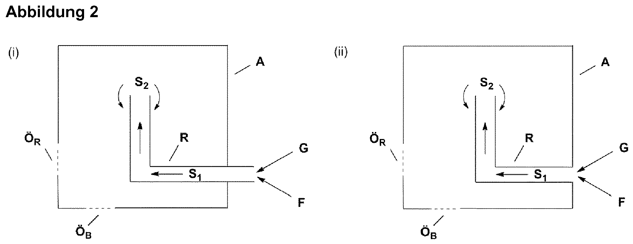

In den Abbildungen 1 und 2 sind mehrere bevorzugte Ausführungsformen des erfindungsgemäßen Verfahrens beschrieben.

In der in Abbildung 1 dargestellten bevorzugten Ausführungsform des erfindungsgemäßen Verfahrens ragt ein Rohr $R$ ohne Einbauten oder mit Einbauten, bevorzugt aber ohne Einbauten, in den Innenraum eines Autoklaven $A$. Das Rohr $R$ steht senkrecht zum Boden des Autoklaven $A$ und ragt aus dem Boden des Autoklaven $A$ hervor [Abbildung 1, (i)] oder schließt direkt mit dem Boden des Autoklaven $A$ ab [Abbildung 1, (ii)]. Das Rohr kann einen rechten (90 °) oder spitzen Winkel (z.B. 60 ° oder 45 ° oder 30 °) zum Boden des Autoklaven $A$ aufweisen - gezeigt in der Abbildung 1 ist ein rechter Winkel. Außerhalb des Autoklaven $A$ werden die beiden Ströme $S_{F1}$ und $S_{G1}$ im Gleichstrom vermischt, so dass ein Strom $S_1$ erhalten wird, der (gerade weil das Rohr $R$ ja einen rechten oder spitzen Winkel zum Boden des Autoklaven $A$ aufweist) entgegen der Schwerkraft durch das Rohr $R$ strömt und dabei die Innenoberfläche $O_I$ des Rohres $R$ kontaktiert. Nach Austritt von $S_1$ aus dem Rohr $R$ wird der Strom $S_2$ erhalten. Die Fließrichtung des Stromes $S_2$ ist direkt nach Austritt des Stromes $S_1$ aus dem Rohr $R$ zunächst gegen die Schwerkraft gerichtet, wird dann aber durch die auf den Strom $S_2$ einwirkende Schwerkraft abgelenkt. $S_2$ läuft dadurch mindestens teilweise am Rohr $R$ hinunter und kontaktiert dabei mindestens teilweise die Außenoberfläche $O_A$ des Rohres $R$. Dadurch findet ein Wärmeaustausch zwischen $S_1$ und $S_2$ statt.

"Gegen die Schwerkraft" bedeutet in dem Fall, dass zumindest ein Teil des Bewegungsvektors der Fließrichtung des betreffenden Stromes gegen die Schwerkraft ausgerichtet ist. Dies kann erfindungsgemäß dadurch gewährleistet werden, dass man, wie in Abbildung 1 gezeigt, das Rohr $R$ durch den Boden eines Autoklaven $A$ führt, wobei ein Ende des Rohres $R$ außerhalb des Autoklaven liegt oder direkt am Autoklavenboden beginnt und das andere Ende des Rohres $R$ im Innenraum des Autoklaven $A$ endet. In Schritt b) des erfindungsgemäßen Verfahrens wird der Strom $S_1$ durch das Rohr $R$ in den Innenraum des Autoklaven $A$ geleitet. Im Autoklaven $A$ tritt dann der Strom $S_1$ am im Autoklaven befindlichen Ende des Rohres **R** aus und fließt als Strom **S₂** mindestens teilweise am Rohr **R** herunter, wodurch ein Wärmeaustausch zwischen **S₁** und **S₂** stattfindet.

In einer alternativen, in der Abbildung 2 gezeigten Ausführungsform der vorliegenden Erfindung kann das Rohr **R** auch von einer Seitenwand des Autoklaven **A** in diesen hineinführen. Das Rohr **R** steht senkrecht zur Seitenwand des Autoklaven **A** und ragt auf der Außenseite des Autoklaven aus der Seitenwand des Autoklaven **A** hervor [Abbildung 2, (i)] oder schließt direkt mit der Seitenwand des Autoklaven **A** ab [Abbildung 2, (ii)]. Das Rohr kann einen rechten (90 °) oder spitzen Winkel (z.B. 60 ° oder 45 ° oder 30 °) zur Seitenwand des Autoklaven **A** aufweisen, solange nur gewährleistet ist, dass die Fließrichtung des Stromes **S₁** beim Austritt aus dem Rohr **R** mindestens teilweise entgegen der Schwerkraft gerichtet ist. Deshalb muss, wenn das Rohr **R** einen spitzen Winkel (z.B. 60 ° oder 45 ° oder 30 °) zur Seitenwand des Autoklaven **A** aufweist, das im Innenraum des Autoklaven **A** befindliche Ende des Rohres **R** höher (im Sinne von "weiter entfernt vom Autoklavenboden) liegen als die Stelle, an der das Rohr **R** die Seitenwand des Autoklaven **A** durchstößt. Wenn das Rohr **R** einen rechten Winkel zur Seitenwand des Autoklaven **A** aufweist, muss das Rohr **R** deshalb eine Krümmung aufweisen, die dafür sorgt, dass das im Innenraum des Autoklaven **A** befindliche Ende des Rohres **R** höher (im Sinne von "weiter entfernt vom Autoklavenboden) liegt als die Stelle, an der das Rohr **R** die Seitenwand des Autoklaven **A** durchstößt. Gezeigt in der Abbildung 2 ist der Fall, in der das Rohr **R** einen rechten Winkel zur Seitenwand des Autoklaven **A** aufweist und deshalb inenrhalb des Autoklaven gekrümmt ist. Dies sorgt dafür, dass dass der Strom S₁ beim Austritt aus dem Rohr **R** mindestens teilweise entgegen der Schwerkraft gerichtet ist.

Der Autoklav **A** muss keine weiteren Öffnungen aufweisen, so dass sich der Strom **S₂** im Autoklaveninnenraum nach Kontaktieren der Außenoberfläche **O$_A$** des Rohres **R** stauen kann. In dieser bevorzugten Ausführungsform kann noch bevorzugter der Wärmeaustausch zwischen **S₁** und **S₂** dadurch weiter verbessert werden, dass zusätzlich der Strom **S₂** im Autoklaveninnenraum gestaut wird und dabei das Rohr **R** in den gestauten Strom **S₂** eintaucht. Durch den Anstieg der Phase **S₂** im Autoklaveninnenraum taucht das Rohr **R** mehr und mehr in diese ein und der Wärmeaustausch zwischen **S₁** im Rohr **R** und **S₂** außerhalb desselben wird dadurch immer gleichmäßiger. Natürlich kann dies nur solange fortgeführt werden, wie das Ende des Rohres, aus dem **S₂** austritt, nicht selbst in diese eintaucht.

Der Autoklav **A** kann aber vorteilhafterweise mindestens eine Öffnung aufweisen, durch welche der Strom **S₂** aus dem Autoklaven mindestens teilweise abgeführt werden kann. Dies kann durch eine Öffnung **Ö$_B$** im Boden des Autoklaven und/oder eine Öffnung **Ö$_R$** in der Autoklavenseitenwand geschehen. Durch solche Öffnungen ist der Pegel von **S₂** im Autoklaven **A** besser steuerbar.

Die nachfolgenden Beispiele sollen die vorliegende Erfindung erläutern, ohne diese darauf zu beschränken.

**Beispiele**

Beispiele **E1** und **V1**: Extraktion von Haselnussöl

    Ausgangsmaterial: Öl aus gerösteten Haselnüssen

    Ziel: Anreicherung der Aromafraktion mittels $CO_2$-Hochdruckextraktion

Beispiel **V1**: Gleichstromextraktion mit überkritischem $CO_2$ ohne Wärmeaustausch zwischen **S₁** und **S₂**- und Produkt-Autoklaveneintritt oben

Haselnussöl wird mit einer Pumpe, die 180 kg / h fördert, über einen Wärmetauscher auf 45 °C temperiert. Das Haselnussöl wird außerhalb des Autoklaven mit einem Strom von $CO_2$ im überkritischen Zustand (Druck 290 bar, Temperatur von 50 °C; Durchsatz von 2700 kg / h) vermischt. Anschließend wird der Strom aus Öl und $CO_2$ über ein senkrecht vom Autoklavendecke abstehendes Rohr von oben in den Autoklaveninnenraum gepumpt. Der Autoklav besitzt bei einem Durchmesser von 41 cm und einer Höhe von 151 cm ein Volumen von 200 l. Nach Austritt aus dem Rohr im Autoklaven sammelt sich das entaromatisierte Öl am Boden des Autoklaven und wird kontinuierlich über einen Zwischenabscheider aus dem Autoklaveninnenraum abgeführt und dann auf Atmosphärendruck entspannt. Das beim Austritt aus dem Rohr im Innenraum des Autoklaven kontinuierlich nach oben abströmende $CO_2$ (mit Aroma und geringer Menge an Öl beladen) wird über ein Extraktionsventil aus dem Innenraum des Autoklaven abgeführt und in einem Extraktabscheider auf 45 bar entspannt. In genau festgelegten Zeitintervallen wird die abgezapfte Menge an Extrakt mit der durchgeströmten Menge an $CO_2$ durch den Autoklaven ins Verhältnis gesetzt und dabei die Beladung ermittelt.

Die durchschnittliche Beladung beträgt pro kg $CO_2$ mit Erdnussöl beträgt 2.62 g, wobei die Abweichung +/- 12%.

Im Extraktabscheider wird das $CO_2$ verdampft und der Extrakt ausgefällt. Das gasförmige $CO_2$ wird dem Extraktionskreislauf wieder zugeführt.

Der mit Haselnussaroma angereicherte Extrakt wird kontinuierlich auf Atmosphärendruck entspannt.

Beispiel **E1**: Gleichstromextraktion mit überkritischem $CO_2$ mit Wärmeaustausch zwischen **S₁** und **S₂**- rund Produkt-Autoklaveneintritt unten

Haselnussöl wird mit einer Pumpe, die 180 kg / h fördert, über einen Wärmetauscher auf 45°C temperiert. Das Haselnussöl wird außerhalb des Autoklaven mit einem Strom von $CO_2$ im überkritischen Zustand (Druck 290 bar, Temperatur von 50 °C; Durchsatz von 2700 kg / h) vermischt. Der Autoklav besitzt bei einem Durchmesser von 41 cm und einer Höhe von 151 cm ein Volumen von 200l und enthält keine Füllkörper. Anschließend wird der Strom aus Öl und $CO_2$ über eine senkrecht vom Autoklavenboden nach oben führende Rohrschlange (5.50 m) von unten in den Autoklaveninnenraum gepumpt. In der am Behälterboden/innen befestigten Rohrschlange erfolgt die kontinuierliche Temperaturanpassung mit dem daraus resultierenden Stoffaustausch. Am Ende der Rohrschlange erfolgt eine tangentiale Anströmung der dort austretenden Phase an die Behälterwandung und auch ein herunterfließen der dort austretenden Phase über die Rohrschlange auf den Autoklavenboden. Die Fließgeschwindigkeit wird dabei stark reduziert und es erfolgt die Phasentrennung - mit Aroma beladenes $CO_2$ strömt nach oben, entaromatisiertes Öl setzt sich aufgrund des Dichteunterschieds nach unten ab. Über einen Zwischenabscheider wird das Öl dann kontinuierlich gegen Atmosphärendruck entspannt. Das kontinuierlich nach oben abströmende $CO_2$ (mit Aroma und Öl beladen) wird über ein Extraktionsventil in den Extraktabscheider auf 45bar entspannt. Dabei wird das CO2 verdampft und der Extrakt ausgefällt. In genau festgelegten Zeitintervallen wird die abgezapfte Menge an Extrakt mit der durchgeströmten Menge an CO2 durch den Autoklaven ins Verhältnis gesetzt und dabei die Beladung ermittelt.

Die durchschnittliche Beladung pro kg $CO_2$ mit Haselnussöl beträgt 3.41g, wobei die Abweichung +/-2,5%beträgt.

Das gasförmige CO2 wird dem Extraktionskreislauf wieder zugeführt. Der mit Haselnussaroma angereicherte Extrakt wird kontinuierlich auf Atmosphärendruck entspannt.

Die erhaltene Aromaqualität ist wesentlich intensiver /selektiver und gleichmäßiger als bei der Gleichstromextraktion/CO2 - und Produkt-Autoklaveneintritt oben.

Bestimmung der Extraktionseffizienz durch Verkostung:

Um die Effizienz der Extraktion zu bestimmen, wurden der jeweils im Vergleichsbeispiel V1 und der im erfindungsgemäßen Beispiel E1 erhaltene Extrakt in Kuhmilch eingerührt, so dass diese eine Konzentration von 50 ppm, 100 ppm, 200 ppm des jeweiligen Extraktes aufwies (Verfahren gemäß G. Eisenbrand, P. Schreier, A.H. Meyer, RÖMPP Lexikon Lebensmittelchemie, 2. Auflage, 2006, Georg-Thieme Verlag Stuttgart, New York, Seiten 434 - 435). Die so erhaltene Mischung wurde dann verkostet, um festzustellen bis zu welcher Verdünnung noch ein spezifisches Haselnussaroma zu erkennen war. Die Ergebnisse sind in der folgenden Tabelle dargestellt:

| Verdünnung des jeweiligen Extraktes in Kuhmilch [in ppm] | Schwellenwertbestimmung Haselnussaroma | |
|---|---|---|
| | Extrakt aus Gleichstrom/oben (Vergleichsbeispiel) | Extrakt aus Gleichstrom/unten (erfindungsgemäßes Beispiel) |
| 50 | Nein | Ja |
| 100 | Bedingt | Ja |
| 200 | Ja | Ja |

Während bei dem durch Gleichstromextraktion/unten erhaltenen Extrakt das spezifische Haselnussaroma auch noch bei einer Verdünnung von 50 ppm eindeutig erkannt werden konnte, war dies bei dem durch Gleichstrom/oben erhaltenen Extrakt bei dieser geringen Konzentration nicht mehr möglich. Auch bei einer Verdünnung auf 100 ppm ist das Haselnussaroma nur bedingt zu erkennen.

Aus den obigen Beispielen ergeben sich damit die folgenden überraschenden Vorteile des erfindungsgemäßen Verfahrens:

1) Die Beladung des $CO_2$ ist bei der Gleichstromextraktion viel geringeren Schwankungen unterworden (+/- 2,5 % bei **E1** gegenüber +/- 12 % bei **V1**).

2) Die Qualität des Aromas im mittels erfindungsgemäßen Beispiel **E1** erhaltenen Extraktes ist wesentlich intensiver /selektiver und gleichmäßiger als bei dem mittels VErgleichsbeispiel **V1** erhaltenen Extraktes.

Die entsprechenden Ergebnisse lassen sich auch bei Wevendung anderer Öle wie zum Beispiel Erdnussöl oder Kokosöl, erzielen.

Ebenso lassen sich solche Ergebnisse mit wässrigen Lösungen enthaltend Fruchtwasser erzielen, wie aus den nachfolgenden Beispielen ersichtlich.

Beispiel **E2**: Extraktion von Apfelfruchtwasser

Eine wässrige Lösung mit einem Apfelaromagehalt von 1000 ppm und einem Ethanolgehalt von 3,0 Gew.% wird mittels einer Pumpe mit 6 kg / h bei Raumtemperatur direkt vor dem Eintritt in einen Autoklaven in Fließrichtung in die $CO_2$-Leitung eingespeist (50 °C, 260 bar, 18 kg $CO_2$/h). In der am Behälterboden befestigten Rohrschlange erfolgt die kontinuierliche Temperaturanpassung mit dem daraus resultierenden Stoffaustausch. Am Ende der Rohrschlange erfolgt eine tangentiale Anströmung der dort austretenden Phase an die Behälterwandung und auch ein herunterfließen der dort austretenden Phase über die Rohrschlange auf den Autoklavenboden. Dabei trennen sich die beiden Phasen - mit Aroma beladenes $CO_2$ strömt nach oben, entaromatisiertes Wasser setzt sich aufgrund des Dichteunterschieds nach unten ab. Über einen Zwischenabscheider wird das Wasser kontinuierlich gegen Atmosphärendruck entspannt. Das mit Aroma beladene $CO_2$ wird im Extraktabscheider auf 45 bar reduziert. Dabei wird das $CO_2$ verdampft und der Aromaextrakt ausgefällt.

**Patentansprüche**

1. Verfahren zur kontinuierlichen Extraktion einer wässrigen und/oder fetthaltigen Flüssigphase $F_1$ umfassend Aromastoffe, mit einem Gas $G_1$ im flüssigen oder überkritischen Zustand, wobei

   (a) ein kontinuierlicher Strom $S_{F1}$ von $F_1$ mit einem kontinuierlichen Strom $S_{G1}$ von $G_1$ im Gleichstrom vermischt wird, wodurch ein kontinuierlicher Strom $S_1$ einer Mischung aus $S_{F1}$ und $S_{G1}$ erhalten wird;
   (b) der in Schritt (a) erhaltene Strom $S_1$ kontinuierlich durch ein Rohr $R$ mit einer Innenoberfläche $O_I$ und einer Außenoberfläche $O_A$ geleitet wird,
   wobei $S_1$ die Innenoberfläche $O_I$ des Rohres $R$ kontaktiert und wodurch in $S_1$ beim Durchströmen des Rohres $R$ die von $S_{F1}$ umfassten Aromastoffe zumindest teilweise in $S_{G1}$ extrahiert werden,
   wodurch, nachdem $S_1$ das Rohr $R$ durchströmt hat und nach Austritt von $S_1$ aus dem Rohr $R$, ein kontinuierlicher Strom $S_2$ einer Mischung eines kontinuierlichen Stromes $S_{F2}$ aus gegenüber $S_{F1}$ an Aromastoffen abgereicherter Flüssigphase $F_2$ und eines kontinuierlichen Stromes $S_{G2}$ aus gegenüber $S_{G1}$ mit Aromastoffen angereichertem flüssigen und/oder überkritischen Gas $G_2$ erhalten wird,
   **dadurch gekennzeichnet, dass**
   (c) mindestens ein Teil des Stromes $S_2$ die Außenoberfläche $O_A$ des Rohres $R$ mindestens teilweise kontaktiert, so dass ein Wärmeaustausch zwischen $S_2$ und $S_1$ stattfindet,

   und **dadurch gekennzeichnet, dass** die Fließrichtung des Stromes $S_1$ beim Austritt aus dem Rohr $R$ mindestens teilweise entgegen der Schwerkraft gerichtet ist.

2. Verfahren nach Anspruch 1, wobei in einem Schritt (d) die in $S_2$ enthaltene $S_{G2}$ von dem in $S_2$ enthaltenen $S_{F2}$ kontinuierlich abgetrennt.

3. Verfahren nach Anspruch 1 oder 2, wobei $F_1$ ein Fett oder Öl pflanzlichen oder tierischen Ursprungs enthaltend Aromastoffe ist.

4. Verfahren nach Anspruch 3, wobei $F_1$ ausgewählt ist aus Erdnussöl, Haselnussöl, Kokosöl.

5. Verfahren nach Anspruch 1 oder 2, wobei $F_1$ ein eine wässrige Lösung enthaltend Fruchtaromen ist.

6. Verfahren nach Anspruch 5, wobei das Fruchtaroma Apfelaroma ist.

7. Verfahren nach einem der Ansprüche 1 bis 6, wobei $G_1$ ausgewählt ist aus Kohlenstoffdioxid, Ethan, Propan, Propen, Butan, $N_2O$ und Mischungen davon.

8. Verfahren nach Anspruch 7, wobei das Gas $G_1$ überkritisches Kohlestoffdioxid ist.

**EP 3 175 897 B1**

9. Verfahren nach einem der Ansprüche 1 bis 8, **dadurch gekennzeichnet, dass** das Rohr **R** in den Innenraum eines Autoklaven **A** führt und der Strom **S$_1$** in Schritt (b) durch das Rohr **R** in den Innenraum des Autoklaven **A** geleitet wird.

10. Verfahren nach Anspruch 9, **dadurch gekennzeichnet dass** der Strom **S$_2$** im Autoklaven derart gestaut wird, dass der gestaute Strom **S$_2$** die im Innenraum des Autoklaven **A** befindliche Außenoberfläche **O$_A$** des Rohres **R** mindestens teilweise bedeckt.

**Claims**

1. Process for continuous extraction of an aqueous and/or fat-containing liquid phase **F$_1$** comprising aroma chemicals with a gas **G$_1$** in the liquid or supercritical state, wherein

(a) a continuous stream **S$_{F1}$** of **F$_1$** is mixed with a continuous stream **S$_{G1}$** of **G$_1$** in cocurrent to obtain a continuous stream **S$_1$** of a mixture of **S$_{F1}$** and **S$_{G1}$**;
(b) the stream **S$_1$** obtained in step (a) is continuously passed through a tube **R** having an internal surface **O$_I$** and an external surface **O$_A$**,
wherein **S$_1$** contacts the internal surface **O$_I$** of the tube **R** and whereby in **S$_1$** during traversal of the tube **R** the aroma chemicals comprised by **S$_{F1}$** are at least partly extracted into **S$_{G1}$**,
whereby after **S$_1$** has traversed the tube **R** and once **S$_1$** has exited the tube **R** a continuous stream **S$_2$** of a mixture of a continuous stream **S$_{F2}$** composed of liquid phase **F$_2$** depleted in aroma chemicals compared to **S$_{F1}$** and of a continuous stream **S$_{G2}$** composed of liquid and/or supercritical gas **G$_2$** enriched in aroma chemicals compared to **S$_{G1}$** is obtained,
**characterized in that**
(c) at least a portion of the stream **S$_2$** at least partly contacts the external surface **O$_A$** of the tube **R** so that a heat exchange takes place between **S$_2$** and **S$_1$**,

and **characterized in that** the flow direction of the stream **S$_1$** on exiting the tube **R** is at least partly oriented against the gravitational force.

2. Process according to Claim 1, wherein in a step (d) the **S$_{G2}$** present in **S$_2$** is continuously separated from the **S$_{F2}$** present in **S$_2$**.

3. Process according to Claim 1 or 2, wherein **F$_1$** is a fat or oil of vegetable or animal origin comprising aroma chemicals.

4. Process according to Claim 3, wherein **F$_1$** is selected from peanut oil, hazelnut oil, coconut oil.

5. Process according to Claim 1 or 2, wherein **F$_1$** is a fruit aroma comprising an aqueous solution.

6. Process according to Claim 5, wherein the fruit aroma is apple aroma.

7. Process according to any of Claims 1 to 6, wherein **G$_1$** is selected from carbon dioxide, ethane, propane, propene, butane, $N_2O$ and mixtures thereof.

8. Process according to Claim 7, wherein the gas **G$_1$** is supercritical carbon dioxide.

9. Process according to any of Claims 1 to 8, **characterized in that** the tube **R** leads into the interior of an autoclave **A** and the stream **S$_1$** is passed through the tube **R** into the interior of the autoclave **A** in step (b).

10. Process according to Claim 9, **characterized in that** the stream **S$_2$** is backed up in the autoclave **A** in such a way that the backed-up stream **S$_2$** at least partially covers the external surface **O$_A$** of the tube **R** located in the interior of the autoclave **A**.

**Revendications**

1. Procédé d'extraction continue d'une phase liquide aqueuse et/ou contenant des matières grasses **F$_1$**, comprenant des substances aromatisantes, avec un gaz **G$_1$** à l'état liquide ou supercritique, selon lequel

(a) un courant continu $S_{F1}$ de $F_1$ est mélangé avec un courant continu $S_{G1}$ de $G_1$ à co-courant, un courant continu $S_1$ d'un mélange de $S_{F1}$ et $S_{G1}$ étant ainsi obtenu ;

(b) le courant $S_1$ obtenu à l'étape (a) est conduit en continu dans un tube $R$ ayant une surface inférieure $O_I$ et une surface extérieure $O_A$,

$S_1$ rentrant en contact avec la surface inférieure $O_I$ du tube $R$ et les substances aromatisantes comprises par $S_{F1}$ étant ainsi au moins partiellement extraites dans $S_{G1}$ dans $S_1$ lors de la traversée du tube $R$,

après la traversée du tube $R$ par $S_1$ et après la sortie de $S_1$ du tube $R$, un courant continu $S_2$ d'un mélange d'un courant continu $S_{F2}$ d'une phase liquide $F_2$ appauvrie en substances aromatisantes en comparaison de $S_{F1}$ et d'un courant continu $S_{G2}$ d'un gaz $G_2$ liquide et/ou supercritique enrichi en substances aromatisantes par rapport à $S_{G1}$, étant ainsi obtenu,

**caractérisé en ce que**

(c) au moins une partie du courant $S_2$ rentre au moins partiellement en contact avec la surface extérieure $O_A$ du tube $R$, de sorte qu'un échange de chaleur ait lieu entre $S_2$ et $S_1$,

et **caractérisé en ce que** la direction d'écoulement du courant $S_1$ lors de la sortie du tube $R$ est au moins partiellement opposée à la force de pesanteur.

2. Procédé selon la revendication 1, selon lequel, dans une étape (d), le $S_{G2}$ contenu dans $S_2$ est séparé en continu du $S_{F2}$ contenu dans $S_2$.

3. Procédé selon la revendication 1 ou 2, dans lequel $F_1$ est une matière grasse ou une huile d'origine végétale ou animale contenant des substances aromatisantes.

4. Procédé selon la revendication 3, selon lequel $F_1$ est choisi parmi l'huile d'arachide, l'huile de noisette, l'huile de coco.

5. Procédé selon la revendication 1 ou 2, selon lequel $F_1$ est une solution aqueuse contenant des arômes de fruit.

6. Procédé selon la revendication 5, dans lequel l'arôme de fruit est un arôme de pomme.

7. Procédé selon l'une quelconque des revendications 1 à 6, dans lequel $G_1$ est choisi parmi le dioxyde de carbone, l'éthane, le propane, le propène, le butane, $N_2O$ et leurs mélanges.

8. Procédé selon la revendication 7, dans lequel le gaz $G_1$ est du dioxyde de carbone supercritique.

9. Procédé selon l'une quelconque des revendications 1 à 8, **caractérisé en ce que** le tube $R$ conduit dans l'espace intérieur d'un autoclave $A$ et le courant $S_1$ est conduit à l'étape (b) par le tube $R$ dans l'espace intérieur de l'autoclave $A$.

10. Procédé selon la revendication 9, **caractérisé en ce que** le courant $S_2$ est retenu dans l'autoclave de sorte que le courant retenu $S_2$ couvre au moins partiellement la surface extérieure $O_A$ du tube $R$ se trouvant dans l'espace intérieur de l'autoclave $A$.

## Abbildung 1

## Abbildung 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0482651 A1
- EP 0041723 A2
- WO 9611043 A
- EP 0159021 A2

**In der Beschreibung aufgeführte Nicht-Patentliteratur**

- RÖMPP Lexikon Lebensmittelchemie. Georg-Thieme-Verlag, 2006, vol. 75
- **R. EGGERS ; H. WAGNER.** *J Supercrit Fluid,* 1993, vol. 6, 31-37
- **S. KRIST.** Lexikon der pflanzlichen Fette und Öle. Springer-Verlag, 2013, 218, , 219, , 262
- **S. M. POURMORTAZAVI ; S. S. HAJIMIRSA-DEGHI.** *J Chromatogr A,* 2007, vol. 1163, 2-24
- **G. EISENBRAND ; P. SCHREIER ; A.H. MEYER.** RÖMPP Lexikon Lebensmittelchemie. Georg-Thieme Verlag, 2006, 434-435